# EUROPEAN PATENT SPECIFICATION

(11) **EP 1 790 543 B1**
(45) Date of publication and mention of the grant of the patent: **28.12.2011**
(21) Application number: 06254950.6
(22) Date of filing: 25.09.2006
(51) Int. Cl.: B60T 8/40, F04B 53/16

(54) **Pump for brake system**
Pumpe für ein Bremssystem
Pompe pour un système de freinage

(30) Priority: 23.11.2005 KR 20050112256
(43) Date of publication of application: 30.05.2007
(73) Proprietor: Mando Corporation, Pyungtaek-City, Kyungki-Do (KR)
(72) Inventor: I-Jin, Yang, c/o 706-804, Top-Maeul-Kyungnam Apt., Seongnam-Si, Gyeonggi-do (KR)
(74) Representative: Bosch, Matthias

(56) References cited:
- EP-A- 1 591 659
- DE-A1- 10 346 237
- US-B1- 6 224 352
- US-B1- 6 302 663

## Description

### BACKGROUND OF THE INVENTION

### 1. Field of the Invention

The present invention relates to a pump for a brake system, and, more particularly, to a pump for a brake system for achieving an improvement in oil pumping performance and pump assembling efficiency.

### 2. Description of the Related Art

Generally, a brake system has the purpose of efficiently preventing a wheel slip caused upon braking, quick start, or sudden acceleration of a vehicle. The brake system includes a plurality of solenoid valves to control a braking hydraulic pressure to be transmitted to hydraulic brakes of vehicle wheels, a pair of low-pressure and high-pressure accumulators to temporarily store an oil discharged from the hydraulic brakes, a pair of pumps provided between the low-pressure and high-pressure accumulators, the pumps being operated by a motor, and an ECU to control operations of the solenoid valves and motor. All the above elements are received in a modulator block made of aluminum.

In particular, the pumps of the brake system serve to forcibly pump the oil stored in the low-pressure accumulator or master cylinder to the high-pressure accumulator, so as to transfer the oil to the hydraulic brakes or master cylinder.

Many patents, including Korean Patent Laid-open No. 2005-0050168 and Korean Patent Registration No. 10-0381592 filed by the applicant of the present invention, disclose conventional pumps for a conventional electronically controlled brake system.

Explaining the conventional electronically controlled brake system in brief, it includes a booster and master cylinder associated with a brake pedal, a plurality of solenoid valves to control a braking hydraulic pressure to be transmitted to hydraulic brakes installed at front and rear vehicle wheels, a low-pressure accumulator to temporarily store oil discharged from the hydraulic brakes, a pair of pumps to pump the oil in the low-pressure accumulator or master cylinder, a motor to drive the pair of pumps simultaneously, and a high-pressure accumulator having an orifice disposed at an exit side thereof to reduce a pressure pulsation of the oil compressed and discharged by operation of the pumps. All the above elements are received in a modulator block made of aluminum. The pair of pumps are operated by the single motor to have a predetermined phase difference, thereby compressing the oil in the low-pressure accumulator or master cylinder and pumping the compressed oil to the high-pressure accumulator. Herein, further detailed description of the brake system will be omitted because it is fully disclosed in the above mentioned patent documents related to the prior art.

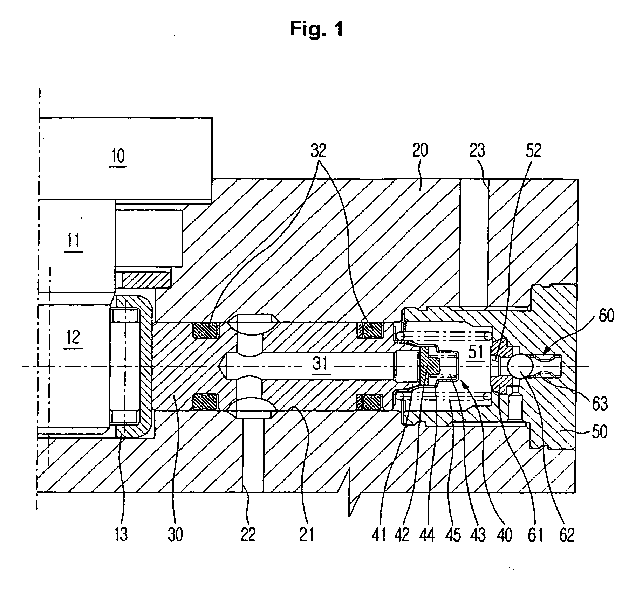

FIG. 1 illustrates a conventional pump for a brake system. The conventional brake system comprises a motor 10, a spindle 11 to be rotated by the motor 10, an eccentric shaft 12 to be eccentrically rotated by the spindle 11, a bearing 13 installed around the eccentric shaft 12, a piston 30 installed in a bore 21 formed in a modulator block 20 to perform reciprocating motions under the assistance of the bearing 13, the piston 30 having an inner oil flow path 31, an inlet valve 40 to open and close an exit side of the oil flow path 31 based on a position of the piston 30, and an outlet valve 60 provided at an open end of the bore 21, operations of the inlet and outlet valves 40 and 60 being contrary to each other.

The modulator block 20 is formed with a suction port 22 and a discharge port 23. The suction port 22 is used to connect an entrance side of the oil flow path 31 defined in the piston 30 to a low-pressure accumulator (not shown) or master cylinder (not shown), and the discharge port 23 is used to connect the an entrance side of a high-pressure accumulator (not shown) to an exit side of the outlet valve 60. The discharge port 23 communicates with the bore 21.

The inlet valve 40 for opening and closing the oil flow path 31 includes a valve opening/closing member 42 installed at an exit-side end of the oil flow path 31, a valve spring 43 to elastically push the valve opening/closing member 42 toward the exit side of the oil flow path 31, and a holder 44 configured to receive the valve opening/closing member 42 and valve spring 43. Also, a conical valve seat 41 is formed at an end of the piston 30 in the exit side of the oil flow path 31. The valve seat 41 is adapted to come into contact with or be spaced apart from the valve opening/closing member 42.

A valve cover 50 is also installed in the bore 21. The piston 30 assembled, at one end thereof, with the inlet valve 40 is inserted in the valve cover 50. The outlet valve 60 is also inserted in the valve cover 50. The valve cover 50 defines a compression chamber 51 with the end of the piston 30 in accordance with the reciprocating motions of the piston 30.

In the conventional pump having the above described configuration, if the motor 10 operates, the spindle 11 is rotated and thus, the eccentric shaft 12 is eccentrically rotated, causing rectilinear reciprocating motions of the piston 30. Thereby, as the inlet and outlet valves 40 and 60 perform opening and closing operations contrary to each other by a pressure variation in the bore 21, oil is compressed and pumped to the high-pressure accumulator (not-shown).

Specifically, if the piston 30 moves toward the outlet valve 60, a pressure of the oil between the piston 30 and the outlet valve 60 rises, causing the inlet valve 40 to be closed and the outlet valve 60 to be opened. Thereby, the oil is pumped to the high-pressure accumulator (not shown) through the discharge port 23.

On the other hand, if the piston 30 moves toward the bearing 13, the pressure of the oil between the end of the piston 30 and the outlet valve 60 falls, causing the inlet valve 40 to be opened and the outlet valve 60 to be closed. Thereby, the oil stored in the low-pressure accumulator (not shown) or master cylinder (not shown) is suctioned into a space between the piston 30 and the outlet valve 60, i.e. compression chamber 51, through the suction port 22 and oil flow path 31.

In addition to the above described configuration, seal members 32 are provided to prevent any possible leakage of the oil from a gap between the piston 30 and the bore 21 during operation of the piston 30.

However, the above described conventional brake system has many problems as follows. Firstly, since the bore 21 guides the reciprocating motions of the piston 30 and the seal members 32 move together with the piston 30, there is a problem in that the piston and bore may cause a gap therebetween due to their friction contact, and the gap may result in serious deterioration in sealing performance by the seal members. Secondly, the seal members have a limit in sealing effect because they are secured to the piston and adapted to move together with the piston. Thirdly, the conventional brake system suffers from low durability thereof due to wear of an inner portion of the bore, an outer portion of the piston, seal members, etc. Fourthly, the piston may be easily separated from the bore in a state wherein the motor, spindle, eccentric shaft, bearing, etc. are removed from the modulator block for the assembling or disassembling of the pump, and reassembling the piston into the bore is a very difficult and troublesome work.

EP 1 591 659 describes a pump having a movable piston, a cylinder element, in which the piston is partly led, and a separate second guide with a guidance section. The piston is led into, and a filter is integrated into the guide. The piston has a drilled hole and a cross hole flowing into the drilled drilling. Fluid flows in an inlet by the pump through a filter and the cross hole into the drilled hole. The drilled hole has a valve seat and the second guide has a seal for the cylinder element.

The present invention has been made in order to solve the above problems. It is an aspect of the invention to provide a pump for a brake system which can achieve an increase in sealing performance between a piston and a bore as well as motion performance and durability of the piston, and can guarantee easy assembling of the piston into the bore.

Consistent with one aspect, an exemplary embodiment of the present invention provides a pump for a brake system comprising: a bore formed in a modulator block and connected to a suction port and discharge port; a piston installed in the bore to perform rectilinear reciprocating motions, the piston comprising an oil flow path to move an oil suctioned through the suction port toward the discharge port; an inlet valve to open and close the oil flow path in accordance with the motions of the piston and an outlet valve to selectively allow the discharge of the compressed oil; and a fixing unit comprising a guide member provided around the piston to be coupled to the bore and adapted to guide the motions of the piston and a sealing member provided around the piston to be coupled to the bore and adapted to seal a gap between the bore and the piston in an airtightness state.

The inlet valve comprises a valve seat formed at an end of the oil flow path, a valve opening/closing member to open and close the valve seat, a valve spring to elastically support the valve opening/closing member, and a holder to hold the valve spring at a fixed position, the holder having an end configured to be caught by the fixing unit, so as to prevent the piston from extending out of the bore beyond a predetermined length.

The guide member and sealing member may be integrally formed with each other to constitute the fixing unit.

The pump may further comprise: a guide bush provided between the piston and the bore to guide the motions of the piston; and a sliding seal member adapted to slide between the guide bush and the fixing unit so as to seal a gap between the piston and the bore , and the fixing unit may be extended from the Inlet valve of the piston and adapted to support the sliding seal member to thereby prevent the sliding seal member from sliding beyond a predetermined distance.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the exemplary embodiments of the invention will become apparent and more readily appreciated from the following description of the embodiments, taken in conjunction with the accompanying drawings, of which:
FIG. 1 is a sectional view showing a conventional pump for a brake system;
FIG. 2 is a sectional view showing a pump for a brake system consistent with an embodiment no belonging to the present invention;
FIG. 3 is a sectional view showing a pump for a brake system consistent with an embodiment no belonging to the present invention;
FIG. 4 is a sectional view showing a pump for a brake system consistent with an embodiment of the present invention; and
FIG. 5 is a sectional view showing a pump for a brake system consistent with another embodiment no belonging to the present invention.

### DETAILED DESCRIPTION OF THE PREFERRED EMBODIMENTS

Reference will now be made in detail to exemplary embodiments examples of which are illustrated in the accompanying drawings, wherein like reference numerals refer to like elements throughout. The embodiments are described below to explain a pump for a brake system by referring to the figures.

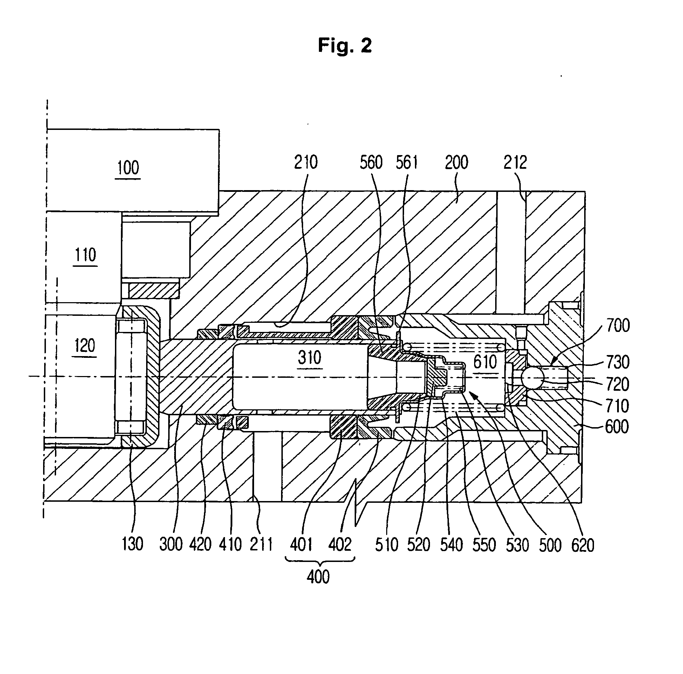

FIG. 2 is a sectional view showing a pump for a brake system consistent with a first embodiment not supporting the independent claim.

As shown in FIG. 2, the pump for a brake system comprises a motor 100, a spindle 110, an eccentric shaft 120 and a bearing 130, which are installed in a modulator block 200. A bore 210 is formed in the modulator block 200, and a piston 300 is inserted in the bore 210 to perform rectilinear reciprocating motions using a force transmitted from the bearing 130. The modulator block 200 is also formed with a suction port 211 and a discharge port 212. If oil from a low-pressure accumulator (not shown) or master cylinder (not shown) is introduced into the pump through the suction port 211, the oil is compressed in the pump and discharged to a high-pressure accumulator (not shown) through the discharge port 212.

A fixing unit 400 is located between an inner circumference of the bore 210 and an outer circumference of the piston 300 and coupled to the bore 210. The fixing unit 400 includes a guide member 401 to guide the rectilinear reciprocating motions of the piston 300 and a sealing member 402 to seal a gap between the bore 210 and piston 300 in an air-tightness state, so as to eliminate the risk of oil leakage.

The piston 300 has an oil flow path 310 formed therein for the movement of the oil suctioned from the suction port 211. A valve seat member 560 is installed at an exit side of the oil flow path 310, i.e. at a leading end of the piston 300, and in turn, an inlet valve 500 is installed at a leading end of the valve seat member 560. The inlet valve 500 is adapted to open and close the oil flow path 310 for controlling introduction or discharge of the oil into or from the oil flow path 310.

The inlet valve 500 includes a valve seat 510 formed at the leading end of the valve seat member 560, a valve opening/closing member 520 to come into contact with or be spaced apart from the valve seat 510, a valve spring 530 to elastically support the valve opening/closing member 520, and a holder 540 configured to receive and support all the above elements.

The inlet valve 500 installed at the leading end of the piston 300 defines a compression chamber 610 with a valve cover 600 fixedly installed in the bore 210. Both the valve seat member 560 and holder 540 formed at the leading end of the piston 300 are elastically supported by a return spring 550 crossing the compression chamber 610. Thereby, when the piston 300 is moved forward to compress the oil, the piston 300 is able to be moved rearward by the return spring 550.

An outlet valve 700 is installed in the valve cover 600 and adapted to control the discharge of the oil compressed in the compression chamber 610. The outlet valve 700 includes an outlet valve seat 710 defining an orifice 620 for the movement of the compressed oil, an outlet valve opening/closing member 720 to open and close the outlet valve seat 710, and a valve spring 730 to elastically support the outlet valve opening/closing member 720.

To prevent the piston 300 from extending out of the bore 210 beyond a predetermined length, the valve seat member 560 has a protruding portion 561 to be caught by the fixing unit 400.

Independently of the fixing unit 400, the piston 300 is externally provided with a guide bush 420 and a sliding seal member 410. The guide bush 420 is coupled to the bore 210 at a trailing end of the piston 300 and adapted to guide the reciprocating motions of the piston 300. The sliding seal member 410 is slidable between the guide bush 420 and the fixing unit 400, to seal a gap between the piston 300 and the bore 210.

The fixing unit 400 is extended by a predetermined length to limit a movement range of the sliding seal member 410. Consequently, the fixing unit 400 has the function of preventing excessive sliding movement of the sliding seal member 410.

Herein, a series of courses for introducing the oil into the suction port 211 and discharging the oil from the discharge port 212 will not be described because they are similar to the prior art.

Although a pump for a brake system consistent with a second non-claimed embodiment is not shown in the drawing, it is noted that the present embodiment is similar to the above described first embodiment except for the fact that the guide member 401 and sealing member 402 of the fixing unit 400 are integrally formed with each other.

Specifically, in this embodiment, the guide member 401 and sealing member 402 are made of the same elastic material as each other to form the single fixing unit 400, so as to perform both piston guiding and sealing functions together.

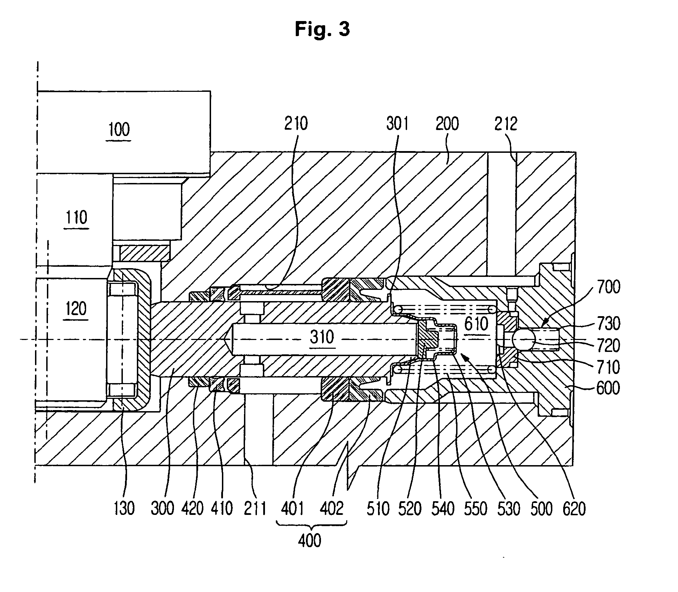

FIG. 3 is a sectional view showing a pump for a brake system consistent with a third non-claimed embodiment.

As shown in FIG. 3, the pump of the present embodiment is basically the same as that of the above described first embodiment in several ways, such as, the piston 300 is arranged to perform the rectilinear reciprocating motions in the bore 210 formed in the modulator block 200, the guide member 401 and sealing member 402 are provided between the inner circumference of the bore 210 and the outer circumference of the piston 300, and the like.

However, the third embodiment of the present invention as shown in FIG. 3 has a feature in that the valve seat 510 is formed by processing the piston 300, instead of installing the valve seat member 560 at the leading end of the piston 300 as described in relation with the first embodiment of the present invention, and a stopper 301 is formed around the valve seat 510. The stopper 301 is configured to be caught by the fixing unit 400, and serves to prevent the piston 300 from extending out of the bore 210 beyond a predetermined length. The stopper 310 has the effect of facilitating the assembling or disassembling of the piston 300 into or from the bore 210 formed in the modulator block 200.

The function and operation of other elements shown in FIG. 3 are the same as those of the above described first embodiment shown in FIG. 2.

Although a pump for a brake system consistent with a fourth non-claimed embodiment is not shown in the drawing, it is noted that the present embodiment is similar to the above described third embodiment except for the fact that the guide member 401 and sealing member 402 of the fixing unit 400 are integrally formed with each other.

Specifically, in this embodiment, the guide member 401 and sealing member 402 are made of the same elastic material as each other to form the single fixing unit 400, so as to perform both piston guiding and sealing functions together.

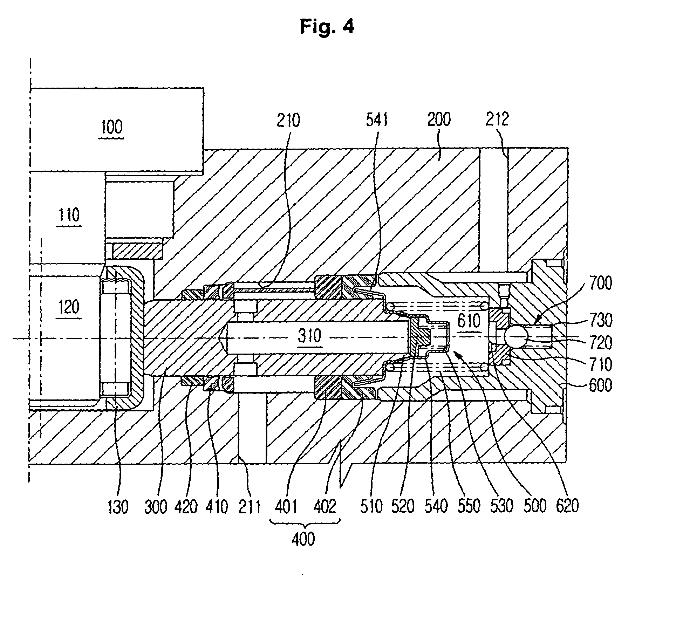

FIG. 4 is a sectional view showing a pump for a brake system consistent with an embodiment of the present invention.

As shown in FIG. 4, the pump of the present embodiment is basically the same as that of the above described third embodiment in several ways, such as, the piston 300 performs the rectilinear reciprocating motions in the bore 210 formed in the modulator block 200, the guide member 401 and sealing member 402 are provided between the inner circumference of the bore 210 and the outer circumference of the piston 300, and the like.

However, the embodiment of the present invention as shown in FIG. 4 has a feature in that, instead of forming a stopper at the piston, an end portion of the holder 540 is bent outward to form a flange portion 541. Thereby, as the flange portion 541 is caught by the fixing unit 400, it is possible to prevent the piston 300 from extending out of the bore 210 by a predetermined length, and this enables easy assembling of the piston 300.

The function and operation of other elements shown in FIG. 4 are the same as those of the above described third embodiment shown in FIG. 3.

Although a pump for a brake system consistent with a preferred embodiment of the present invention is not shown in the drawing, it is noted that the present embodiment is similar to the above described fifth embodiment except for the fact that the guide member 401 and sealing member 402 of the fixing unit 400 are integrally formed with each other.

Specifically, in the preferred embodiment of the present invention, the guide member 401 and sealing member 402 are made of the same elastic material as each other to form the single fixing unit 400, so as to perform both piston guiding and sealing functions together.

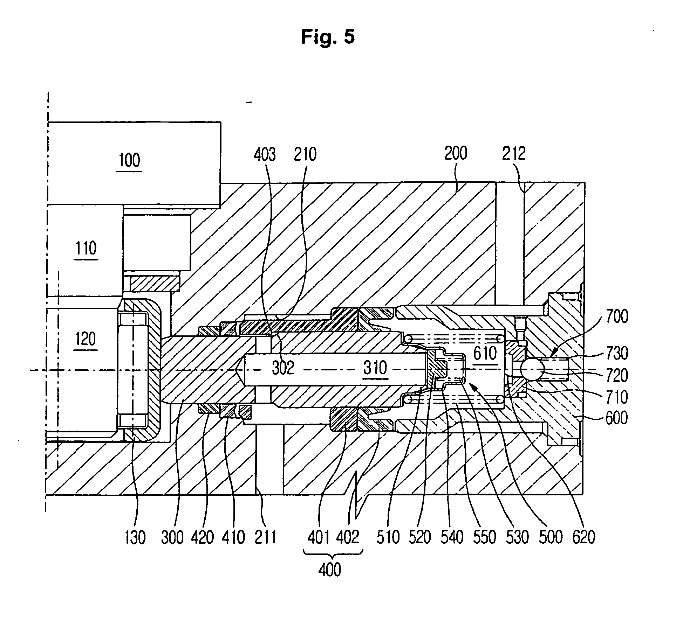

FIG. 5 is a sectional view showing a pump for a brake system consistent with another non-claimed fifth embodiment.

As shown in FIG. 5, the pump of the present embodiment is basically the same as that of the above described embodiment of the invention in several ways, such as, the piston 300 performs the rectilinear reciprocating motions in the bore 210 formed in the modulator block 200, the guide member 401 and sealing member 402 are provided between the inner circumference of the bore 210 and the outer circumference of the piston 300, and the like.

However, the embodiment shown in FIG. 5 has a feature in that the piston 300 is provided with a stepped portion 302, rather than providing the holder with the flange portion. Specifically, the piston 300 consists of two parts having different outer-diameters from each other, and thus, the stepped portion 302 is formed between the large-diameter part and the small-diameter part. Also, the fixing unit 400 consists of two parts having different inner-diameters from each other, and thus, a stepped holding portion 403 is formed between the small-diameter part and the large-diameter part. With this configuration, the stepped portion 302 is caught by the holding portion 403, to prevent the piston 300 from extending out of the bore 210 beyond a predetermined length. This has the effect of facilitating the assembling or disassembling of the piston 300 into or from the modulator block 200.

The function and operation of other elements shown in FIG. 5 are the same as those of the above described embodiment of the present invention shown in FIG. 4.

Although a pump for a brake system consistent with another non-claimed sixth embodiment is not shown in the drawing, it is noted that this embodiment is similar to the above described embodiment of FIG. 5 except for the fact that the guide member 401 and sealing member 402 of the fixing unit 400 are integrally formed with each other.

Specifically, in this embodiment, the guide member 401 and sealing member 402 are made of the same elastic material as each other to form the single fixing unit 400, so as to perform both piston guiding and sealing functions together.

As apparent from the above description, the present invention provides a pump for a brake system having the following several effects. Firstly, the pump can safely and efficiently guide reciprocating motions of a piston, and achieve an increase in sealing performance in accordance with the compression of oil in a bore. Further, the pump can enhance durability thereof by reducing wear between the piston and the bore, and facilitate the assembling or disassembling of the piston, etc. into or from a modulator block.

## Claims

1. A pump for a brake system comprising:
a bore (210) formed in a modulator block (200) and connected to a suction port (211) and discharge port (212);
a piston (300) installed in the bore (210) to perform rectilinear reciprocating motions, the piston (300) comprising an oil flow path (310) to move an oil suctioned through the suction port (211) toward the discharge port (212);
an inlet valve (500) to open and close the oil flow path (310) in accordance with the motions of the piston (300) and an outlet valve (700) to selectively allow the discharge of the compressed oil;
a fixing unit (400) comprising a guide member (401) provided around the piston (300) to be coupled to the bore (210) and adapted to guide the motions of the piston (300) and a sealing member (402) provided around the piston (300) to be coupled to the bore (210) and adapted to seal a gap between the bore (210) and the piston (300) in an airtightness state; and
the inlet valve (500) comprises a valve seat (510) formed at an end of the oil flow path (310), a valve opening/closing member (520) to open and close the valve seat (510), a valve spring (530) to elastically support the valve opening/closing member (520), and a holder (540) to hold the valve spring (530) at a fixed position, **characterized in that** the holder (540) having an end configured to be caught by the fixing unit (400), so as to prevent the piston (300) from extending out of the bore (210) beyond a predetermined length.

2. The pump according to claim 1, wherein the guide member (401) and sealing member (402) are integrally formed with each other to constitute the fixing unit (400).

3. The pump according to claim 1 or 2, further comprising:
a guide bush (420) provided between the piston (300) and the bore (210) to guide the motions of the piston (300); and
a sliding seal member (410) adapted to slide between the guide bush (420) and the fixing unit (400), so as to seal a gap between the piston (300) and the bore (210),
wherein the fixing unit (400) is extended from the inlet valve (500) of the piston (300) and adapted to support the sliding seal member (410) to thereby prevent the sliding seal member (410) from sliding beyond a predetermined distance.

## Patentansprüche

1. Pumpe für ein Bremssystem, die aufweist:
eine Bohrung (210), die in einem Modulatorblock (200) ausgebildet und mit einer Saugöffnung (211) und einer Auslassöffnung (212) verbunden ist;
einen Kolben (300), der in der Bohrung (210) angebracht ist, um geradlinige Hin- und Herbewegungen durchzuführen, wobei der Kolben (300) einen Ölfließpfad (310) aufweist, um Öl, das durch die Saugöffnung (211) angesaugt wird, zu der Auslassöffnung (212) hin zu bewegen;
ein Einlassventil (500), um den Ölfließpfad (310) gemäß den Bewegungen des Kolbens (300) zu öffnen und zu schließen, und ein Auslassventil (700), um das Ausfließen des komprimierten Öls selektiv zu ermöglichen;
eine Fixiereinheit (400) mit einem Führungselement (401), das um den Kolben (300) herum angeordnet ist, um mit der Bohrung (210) verbunden zu werden, und das so ausgelegt ist, dass es die Bewegungen des Kolbens (300) führt, und mit einem Dichtungselement (402), das um den Kolben (300) herum angeordnet ist, um mit der Bohrung (210) verbunden zu werden, und das so ausgelegt ist, dass es einen Zwischenraum zwischen der Bohrung (210) und dem Kolben (300) in luftdichtem Zustand versiegelt; und
wobei das Einlassventil (500) einen Ventilsitz (510) aufweist, der an einem Ende des Ölfließpfads (310) ausgebildet ist, ein Ventilöffnungs-/schließelement (520), um den Ventilsitz (510) zu öffnen und zu schließen, eine Ventilfeder (530), um das Ventilöffnungs-/schließelement (520) elastisch zu stützen, und einen Halter (540), um die Ventilfeder (530) in einer fixierten Position zu halten,
**dadurch gekennzeichnet, dass**
der Halter (540) ein Ende hat, das so konfiguriert ist, dass es in die Fixiereinheit (400) einrastet, um zu verhindern, dass sich der Kolben (300) über eine vorgegebene Länge hinaus aus der Bohrung (210) erstreckt.

2. Pumpe nach Anspruch 1, wobei das Führungselement (401) und das Dichtungselement (402) einstückig miteinander ausgebildet sind, um die Fixiereinheit (400) zu bilden.

3. Pumpe nach Anspruch 1 oder 2, die des Weiteren aufweist:
eine Führungsbuchse (420), die zwischen dem Kolben (300) und der Bohrung (210) vorgesehen ist, um die Bewegungen des Kolbens (300) zu führen; und
ein gleitendes Dichtungselement (410), das so ausgelegt ist, dass es zwischen der Führungsbuchse (420) und der Fixiereinheit (400) gleitet, um einen Zwischenraum zwischen dem Kolben (300) und der Bohrung (210) abzudichten,
wobei die Fixiereinheit (400) sich von dem Einlassventil (500) des Kolbens (300) erstreckt und so ausgelegt ist, dass sie das gleitende Dichtungselement (410) stützt, um **dadurch** zu verhindern, dass das gleitende Dichtungselement (410) über einen vorgegebenen Abstand hinaus gleitet.

## Revendications

1. Pompe pour un système de freinage comprenant :
un alésage (210) formé dans un bloc de modulateur (200) et raccordé à un orifice d'aspiration (211) et à un orifice de refoulement (212) ;
un piston (300) installé dans l'alésage (210) pour effectuer des mouvements de va-et-vient rectiligne, le piston (300) comprenant une voie de passage d'huile (310) pour déplacer une huile aspirée à travers l'orifice d'aspiration (211) vers l'orifice de refoulement (212) ;
une soupape d'aspiration (500) pour ouvrir et fermer la voie de passage d'huile (310) conformément aux mouvements du piston (300) et une soupape de refoulement (700) pour permettre sélectivement le refoulement de l'huile comprimée ;
une unité de fixation (400) comprenant un élément de guidage (401) prévu autour du piston (300) pour être couplé à l'alésage (210) et adapté pour guider les mouvements du piston (300) et un élément d'étanchéité (402) prévu autour du piston (300) pour être couplé à l'alésage (210) et adapté pour rendre étanche un espace entre l'alésage (210) et le piston (300) dans un état d'étanchéité à l'air; et
la soupape d'aspiration (500) comprend un siège de soupape (510) formé au niveau d'une extrémité de la voie de passage d'huile (310), un élément d'ouverture/fermeture de soupape (520) pour ouvrir et fermer le siège de soupape (510), un ressort de soupape (530) pour supporter élastiquement l'élément d'ouverture/fermeture de soupape (520), et un dispositif de maintien (540) pour maintenir le ressort de soupape (530) au niveau d'une position fixe,
**caractérisée en ce que** le dispositif de maintien (540) comporte une extrémité configurée pour être saisie par l'unité de fixation (400), de façon à empêcher que le piston (300) s'étende hors de l'alésage (210) au-delà d'une longueur prédéterminée.

2. Pompe selon la revendication 1, dans laquelle l'élément de guidage (401) et l'élément d'étanchéité (402) sont formés solidairement l'un l'autre pour constituer l'unité de fixation (400).

3. Pompe selon la revendication 1 ou 2, comprenant en outre :
une bague de guidage (420) prévue entre le piston (300) et l'alésage (210) pour guider les mouvements du piston (300) ; et
un élément d'étanchéité coulissant (410) adapté pour coulisser entre la bague de guidage (420) et l'unité de fixation (400), de façon à rendre étanche un espace entre le piston (300) et l'alésage (210),
dans laquelle l'unité de fixation (400) s'étend depuis la soupape d'aspiration (500) du piston (300) et est adaptée pour supporter l'élément d'étanchéité coulissant (410) pour de ce fait empêcher que l'élément d'étanchéité coulissant (410) coulisse au-delà d'une distance prédéterminée.
